# EUROPEAN PATENT SPECIFICATION

(11) **EP 4 476 271 B1**
(45) Date of publication and mention of the grant of the patent: **20.05.2026**
(21) Application number: 23703062.2
(22) Date of filing: 07.02.2023
(51) Int. Cl.: C08F 10/00, C08G 61/08, B01J 21/02, B01J 31/14, B01J 31/02, B01J 31/22, B01J 27/08, B01J 31/12

(54) **AN OLEFIN METATHESIS POLYMERIZATION CATALYST SYSTEM AND CURABLE COMPOSITIONS CONTAINING THE CATALYST SYSTEM**
OLEFIN-METATHESE-POLYMERISATIONSKATALYSATORSYSTEM UND HÄRTBARE ZUSAMMENSETZUNGEN, DIE DAS KATALYSATORSYSTEM ENTHALTEN
SYSTÈME DE CATALYSEUR DE POLYMÉRISATION DE MÉTATHÈSE D'OLÉFINES ET COMPOSITIONS DURCISSABLES CONTENANT LE SYSTÈME DE CATALYSEUR

(30) Priority: 11.02.2022 EP 22156389
(43) Date of publication of application: 18.12.2024
(73) Proprietor: Telene SAS, 59910 Bondues (FR); Rimtec Corporation, Tokyo 100-0005 (JP)
(72) Inventor: DROZDZAK-MATUSIAK, Renata Anna, 59290 Wasquehal (FR); DAEMEN, Alexander Pieter Maria, 3090 Overije (BE); NISHIOKA, Naoki, 59700 Marcq en Baroeul (FR); PÁPAI, Imre, 1037 Budapest (HU); MADARÁSZ, Ádám, 1097 Budapest (HU); ROBÉ, Emmanuel, 2011 Budakalász (HU); GULYÁS, Henrik, 43004 Tarragona (ES)
(74) Representative: Arnold & Siedsma
(86) International application number: PCT/EP2023/052970
(87) International publication number: WO 2023/152124

(56) References cited:
- EP-A1- 0 348 852
- US-A- 5 120 806
- HANS REICH: "Equilibrium pKa Table (DMSO and reference)", 8 September 2020 (2020-09-08), XP055944115, ISBN: 978-0-691-20606-6, Retrieved from the Internet <URL:https://organicchemistrydata.org/hansreich/resources/pka/pka_data/pka-compilation-reich-bordwell.pdf> [retrieved on 20220719]

## Description

### FIELD OF THE INVENTION

The present invention relates to an olefin metathesis polymerization catalyst based on metalate as pre-catalyst and an aluminium complex as co-catalyst, particularly having improved properties over existing catalysts. Such catalysts are widely used in applications for ring opening metathesis polymerization (ROMP) of cyclic olefins, such as dicyclopentadiene (DCPD).

### BACKGROUND OF THE INVENTION

Preparation of polymers by ring opening metathesis polymerization (ROMP) of cyclic olefins is well known in the art. A good example is the production of polydicyclopentadiene polymer (PDCPD) by using dicyclopentadiene as monomer and a metathesis catalyst system including a pre-catalyst and a co-catalyst. Other monomers that can be used are monocyclic olefins which contain 3 or more carbon atoms and one or more double bonds. Poly-cycloolefins which contain a norbornene group can also be used for the ROM polymerization. The pre-catalyst is generally selected from molybdenum and tungsten compounds whereas the co-catalyst is normally selected from organometallics. Examples of such organometallics are alkyl aluminum (or aluminum alkyls) and alkyl aluminum halides.

US-4923936 describes heteropolymetallate metathesis catalysts for cyclic olefin polymerization. Polymerization of cyclic olefins by ring opening is accomplished in the presence of a metathesis catalyst system composed of organoammonium, organophosphonium, organoarsonium, heteropolymolybdate or heteropolytungstate pre-catalyst, and a metathesis co-catalyst. Polymerization proceeds by ring opening of cyclic olefins and results in a polymer that has unsaturation in the backbone. The described pre-catalysts are soluble in the monomer and are preferably insensitive to air and moisture. Co-catalysts selected from organometallic compounds and other ingredients are used in conjunction with the pre-catalysts disclosed to polymerize the cyclic olefins by polymerization, such as by solution or bulk (solvent-free) polymerization. Many co-catalysts have been described and tested in the polymerization reaction. US-5120806A describes an olefin metathesis catalyst system comprising a molybdenum or tungsten catalyst and an activator composition comprising an alkoxyalkylaluminum halide and a tin compound.

The above-described pre-catalyst / co-catalyst combinations have disadvantages. For instance, the known catalyst systems are rather sensitive to humidity and moisture, affecting catalytic reactivity and impairing complete monomer conversion. For this reason, it would be desirable to provide a co-catalyst showing relatively fast initiation of the polymerization reaction allowing to reach a relatively high monomer conversion before eventual catalyst decomposition occurs.

The known pre-catalysts generally suffer from too slow initiation resulting in a relatively low monomer conversion, in particular when short cycle times in the order of seconds to minutes are needed. As a result, it appears that cyclic olefin molded products with an average thickness of less than 3 mm are difficult, if not impossible, to mold. Another consequence of the relatively slow initiation is that flash parts of a molded article (such flash parts are by definition thin-walled, possibly in the order of tenths of mm) may not be fully cured. This is a serious drawback since the removal of flash parts is then technically difficult. It may be very time-consuming, which is undesirable, given the usually relatively fast curing achievable in polymerizing cyclic olefins.

Adding a chlorinated agent, such as silicium tetrachloride (SiCl₄), has been proposed for offsetting the slow initiation of some catalytic systems to certain extent. However, this compound - or similar - shows significant sensitivity to moisture that may result in the generation of unwanted substances, such as corrosive compounds (HCl). These compounds may be harmful to the mold, used in making molded articles from the curable composition containing the catalyst system, and generally also to health and environment.

### SUMMARY OF THE INVENTION

It is an object of the present invention to provide an improved catalyst system comprising a metalate-based pre-catalyst and a novel co-catalyst in the ROM polymerization reaction, which catalyst system at least partly overcomes the above stated disadvantages of the state-of-the-art systems. It is another object of the present invention to provide an improved curable composition, comprising a cyclic olefin and the olefin metathesis polymerization catalyst system as claimed. Yet another object is to provide a method of manufacturing a molded article of the improved curable composition, and to provide thin-walled molded articles with a smallest thickness, wherein the smallest or an average thickness (apart from optional flash parts) is between 0.2 and 4 mm.

These and other objectives are met by an olefin metathesis polymerization catalyst system in accordance with claim 1. The invented catalyst system comprises a metalate as pre-catalyst and an aluminum complex as co-catalyst, wherein the aluminum complex is an alkoxyalkylaluminum halide complex [(OR¹)(R²)AlX¹]ₙ wherein OR¹ is an alkoxy ligand derivable from an alcohol HOR¹ with a pKa (calculated considering dimethylsulfoxide (DMSO) as solvent) in the range from 18-28 and wherein further n is an integer in the range of from 1-3, R² is an alkyl, and X¹ is an halide.

Another aspect of the invention relates to a curable composition, comprising a cyclic olefin and an olefin metathesis polymerization catalyst system as claimed.

Yet another aspect of the invention relates to a method of manufacturing a molded article of the curable composition as claimed, the method comprising:
a) providing the curable composition by combining the cyclic olefin and the olefin metathesis polymerization catalyst system in a mold;
b) subjecting the composition to conditions effective to promote an olefin metathesis reaction of the cyclic olefin in the closed mold; and
c) taking the cured composition out of the mold to obtain the molded article.

In another aspect of the invention, a molded article is provided that is obtainable by the method as claimed, wherein the molded article has a smallest thickness, and the smallest thickness or an average thickness of the molded article, apart from optional flash parts, is between 0.2 and 4 mm, more preferably between 0.2 and 3 mm, even more preferably between 0.2 and 2 mm, even more preferably between 0.2 and 1 mm, and most preferably between 0.2 and 0.5 mm.

### DETAILED DESCRIPTION OF THE INVENTION

Unless otherwise defined (for instance related to pKa), all technical and scientific terms used herein have the same meaning as commonly understood by one of ordinary skill in the art which this invention belongs. The terminology used in the description of the invention herein is for the purpose of describing particular embodiments only and is not intended to be limiting of the invention.

According to the invention, an olefin metathesis polymerization catalyst system is provided comprising a metalate as pre-catalyst and an aluminum complex as co-catalyst, wherein the aluminum complex is an alkoxyalkylaluminum halide complex [(OR¹)(R²)AlX¹]ₙ with OR¹ being an alkoxy ligand derivable from an alcohol with a pKa in the range from 18-28, wherein the alkoxy ligand OR¹ is functionalized with a halogen, and wherein further n is an integer in the range of from 1-3, R² is an alkyl, and X¹ is an halide.

According to the invention, the alkoxy is functionalized, which, in the context of the present disclosure, means that the backbone of the alkoxy is substituted with functional groups.

It has turned out that the specifically claimed alkoxyalkylaluminum halide complexes show a much faster initiation rate than the known complexes, which allows to produce cyclic olefin products with an average thickness of less than 4 mm, such as films for instance. Moreover, the claimed alkoxyalkylaluminum halide complexes potentially allow a substantially full conversion of the polymerization reaction to be achieved, wherein substantially preferably means a conversion of larger than 90%, more preferably of larger than 95%, even more preferably of larger than 98%, and most preferably around 100%, given the appropriate conditions and relative amount of the catalyst system within the curable composition. This greatly improves the quality of an article molded from a cyclic olefin composition comprising the claimed catalyst system.

Furthermore, flash parts of an article molded from a cyclic olefin composition comprising the claimed catalyst system, also turn out to be substantially cured. This is surprising since it is generally believed that the catalyst system gets prematurely decomposed in these flash parts when the temperature rises too high. Consequentially, removing flash parts turns out to be much easier than in the state-of-the-art systems.

A further improved catalyst system according to an embodiment is provided such that the pKa of the alcohol is in the range of from 20-28, more preferably from 21-27, and most preferably from 22-26. This preferred acidity range of the alcohol further enhances the desired properties of an article, molded with a cyclic olefin composition comprising the catalyst system.

When ranges are given in the present application, they are considered to include the end values given for the range.

The claimed alkoxyalkylaluminum halide complex may be obtained from the corresponding dialkylaluminum halide by introducing an alkoxy group therein. This can be achieved either with an alcohol, or in other ways. The present invention uses an alcohol HOR¹, having a pKa in the range of from 18-28. The dialkylaluminum halide can be treated with the alcohol to form [(OR¹)(R²)AlX¹]ₙ before adding it to the system. The reaction of the dialkylaluminum halide (R²)₂AlX¹ with the alcohol HOR¹ is preferably conducted in the absence of water by providing a blanket of nitrogen and mixing the two ingredients to obtain an isolated monomer, dimer or trimer, or mixtures thereof. However, another embodiment relates to a catalyst system, wherein the aluminum complex is obtained by *in-situ* reacting the dialkylaluminum halide (R²)₂AlX¹ with the alcohol HOR¹ in the reaction mixture with the cyclic olefin. Preferred alcohols yield alkoxyalkylaluminum halide complexes soluble in the cyclic olefin monomer. In such an embodiment, bulk polymerization of a curable composition, comprising a cyclic olefin and the olefin metathesis polymerization catalyst system as claimed becomes possible, obviating the need for using additional solvents.

It must be noted that, in accordance with the invention, the alkoxy ligand is derivable from an alcohol HOR₁ having a pKa in the range of from 18-28, Preferably, the alkoxy ligand is derived from the alcohol. However, the alkoxy ligand may also be derived from aldehydes and/or ketones, resulting in alkoxyalkylaluminum halide complexes of similar or same structure as claimed.

It should further be noted that the aluminum complex co-catalyst in its dimer or trimer form may consist of *cis-* and *trans*-stereoisomers and may be used as the mixture of these stereoisomers. Furthermore, in case of chiral alcohols both enantiomers and their racemic mixture may be used to form the aluminum complex co-catalyst. The use of a racemic mixture of chiral alcohols leads to the formation of additional stereoisomers of the aluminum complex co-catalysts, all of them being efficient to produce the catalytic system with improved properties. The chiral alcohols may have two or more stereogenic elements, hence may comprise diastereoisomers for instance.

The alkoxy group in the co-catalyst appears to function in inhibiting the reducing power of the corresponding dialkylaluminum halide co-catalyst by replacing some of the alkyl groups on the aluminum. The lowered reducing power of the alkoxyalkylaluminum halide co-catalyst may provide an extended pot life, allowing convenient mixing of the various ingredients at room temperature before initiating the polymerization reaction and subsequent polymerization.

The alkoxyalkylaluminum halide obtained may be represented by the formula [(OR¹)(R²)AlX¹]ₙ. Herein, R¹ is an alkyl moiety containing about 1 to 18 carbon atoms, whereas R² is an alkyl moiety containing 1 to 18 carbon atoms. X¹ represents a halogen selected from chlorine, iodine, bromine and fluorine, of which chlorine is preferred.

In another embodiment of the invention, a catalyst system is provided wherein R² is alkyl and X¹ is chlorine (Cl).

In yet another embodiment, the catalyst system is characterized in that n = 2.

In other embodiments, the alkoxy ligand OR¹ in the catalyst system is an alcohol derivative, wherein the alkoxy ligand is derived from a primary or secondary alcohol HOR¹. One may also add aryloxyalkylaluminum halides to the claimed catalyst system. The aryloxy group may for instance be derived from (unhindered) phenols and resorcinols. In another useful embodiment however, the catalyst system is provided such that the alcohol HOR¹ is an aliphatic alcohol and the aluminum complex does not comprise an aryloxy ligand

The inventors have discovered that the steric bulk of the alcohol HOR¹ may play an essential role in the performance of the catalyst system and can be used to improve it according to the invention's objectives. Therefore, a preferred embodiment of the invention provides a catalyst system, wherein the alcohol HOR¹ has a steric bulk defined by the XCA cone angle ranging from 160 to 200°, more preferably from 170 to 190°.

The inventors have further discovered that the Lewis basicity of optional heteroatoms and functional groups present in R¹ of the alcohol HOR¹ may also have an effect on the desired properties. The inventors introduced the descriptor GLB to characterize the Lewis basicity of such optional heteroatoms and functional groups, which is the Gibbs free energy (in kcal/mol) of the association of appropriate model compounds of such optional heteroatoms and functional groups to AlCl₃ as model Lewis acid. GLB is defined in full details below. Therefore, another preferred embodiment provides a catalyst system, wherein the heteroatoms and/or functional groups present in the alcohol OR¹ have their GLB descriptor higher than -12, more preferably higher than -10, even more preferably higher than -8, and most preferably not lower than -6.

The presence of some functional groups in the alcohols may promote co-catalyst decomposition, which is less desirable, depending on the rate of decomposition for instance. It could even be that such alcohols may hamper promoting the desired ROMP reactions. Functionalized alcohols that are less desirable, and therefore excluded, comprise benzyl alcohols and alcohols comprising - CH₂F functionality.

In addition to the co-catalyst, the metathesis polymerization catalyst system of the invention comprises a metalate as pre-catalyst capable of metathesis ring-opening polymerization of cyclic olefin monomer units. Such a pre-catalyst may comprise a complex having a transition metal atom as center atom and a plurality of ions, atoms, and/or compounds bonded thereto. Transition metal atoms may be used to advantage, of which tantalum, molybdenum, tungsten, ruthenium, vanadium and osmium may be mentioned in particular.

Very suitable catalysts are those wherein the metalate is molybdate, tungstate, or mixtures thereof, preferably molybdate. Molybdates and tungstates may be defined by the following formula:

[R³₄N]_{z}[R⁴₃NH]_{(2y-6x-z)}MₓO_{y}

where M represents either molybdenum or tungsten; x and y represent the number of M and O atoms in the molecule based on the oxidation state of +6 for molybdenum, +6 for tungsten, and -2 for oxygen; and the R³ and R⁴ moieties can be the same or different and are selected from hydrogen, alkyl, and alkylene groups each containing from 1 to 20 carbon atoms, and cycloaliphatic groups each containing from 5 to 16 carbon atoms. The above formula covers any quaternary:tertiary ammonium ratio.

The quaternary ammonium may comprise compounds formulated as follows:

[R^{3a}R^{3b}R^{3c}R^{3d}N]⁺

Whereas the tertiary ammonium may comprise compounds formulated as follows:

[R^{4a}R^{4b}R^{4c}HN]⁺

The size of the R⁴ moiety may not be too small if the metalate is to be soluble in a hydrocarbon reaction solvent and/or in a cyclic olefin monomer. Where all R⁴ moieties are the same, each preferably contains from 5 to 18 carbon atoms. Where all the R⁴ moieties are different, each preferably contains from 4 to 18 carbon atoms.

Specific examples of suitable metalates such as molybdates and tungstates include tridodecylammonium molybdates and tungstates, methyltricaprylammonium molybdates and tungstates, tri(tridecyl) ammonium molybdates and tungstates, and trioctylammonium molybdates and tungstates.

An embodiment of the invention may provide a catalyst system, wherein the catalyst system further comprises a halogen compound MₓX_{y}R_{z}, wherein M is tungsten (W), molybdenum (Mo), titanium (Ti), or silicon (Si), preferably Si, wherein X is fluoride (F), chloride (Cl), bromide (Br), or iodide(I), preferably Cl, and wherein R is O, O-alkyl, O-phenyl, alkyl, phenyl, and wherein x, y, z may be from 1-10. The catalyst system according to this embodiment is preferably characterized in that the halogen compound comprises a silicon alkyl chloride SiₓCl_{y}R_{z}, wherein R is O, O-alkyl, alkyl, and x, y, z may be from 1-10, in an amount of between 0 and 3 wt.% relative to the total amount of the catalyst system.

An important advantage of the invented catalyst system is that it does not require the addition of the further halogen compound MₓX_{y}R_{z}, or in a minor amount only A particularly preferred embodiment provides a catalyst system wherein the alkylchlorosilane comprises siliciumtetrachloride and the catalyst system comprises at most 0.15 wt.% siliciumtetrachloride (SiCl₄), more preferably at most 0.12 wt.%, even more preferably at most 0.10 wt.%, and most preferably at most 0.06 wt.%, relative to the total amount of the catalyst system.

Even more preferably, the catalyst system does not comprise tetrachlorosilane. Embodiments comprising no more than 0.06 wt.% of the further halogen compound, in particular SiCl₄, show a decreased sensitivity to moisture. Further, the release of corrosive compounds, such as HCl, is reduced or even completely prevented.

The catalyst system is characterized in that the alkoxy ligand OR¹ is functionalized with a halogen. The halogen may for instance be chlorine (Cl) or fluorine (F), preferably fluorine (F). The latter embodiment is preferred since some co-catalysts may undergo a slight decomposition during molding operations of the polymer and upon reaction with humidity may release compounds. The released compounds in this embodiment are non-carcinogenic, whereas some of these compounds in other embodiments are classified as carcinogenic and the release of these substances to the atmosphere is particularly problematic.

In yet another catalyst system according to an embodiment of the invention, the alkoxy ligand OR¹ is a derivative of an alcohol HOR¹ selected from 1,1,1-trifluoro-2-propanol, 1,1-difluoro-2-propanol, and 1-chloro-2-propanol.

A particularly preferred catalyst system according to the invention comprises a molybdate as pre-catalyst and [Al(1,1,1-trifluoro-2-propoxy)(Cl)(C₂H₅)]ₙ as co-catalyst with n=1 or 2.

Another aspect of the invention relates to a curable composition, comprising a cyclic olefin and an olefin metathesis polymerization catalyst system as claimed.

The cyclic olefin used in the present invention comprises cyclic olefin monomer units that may be arranged to form a cyclic olefin polymer, obtained by polymerizing cyclic olefin monomer units.

Any polymer of cyclic olefin monomer units known in the art may in principle be used in the invention. The cyclic olefin polymer comprises cyclic monomer units of a saturated cyclic hydrocarbon (cycloalkane) structure, and/or of an unsaturated cyclic hydrocarbon (cycloalkene) structure. The number of carbon atoms forming the cyclic structure in a monomer unit also is not particularly limited, but in preferred embodiments ranges from 4 to 30, more preferably from 5 to 20, and most preferably from 5 to 15.

The amount of cyclic olefin monomer units in the cyclic olefin polymer may be selected within a broad range, but is preferably 50 wt. % or more, more preferably 70 wt. % or more, and most preferably 90 wt. % or more, exclusive of any filler in the composition. A combination of different cyclic monomers may also be used. The cyclic olefin polymer of the composition may comprise an addition polymer of cyclic olefin monomer units, optionally copolymerized with another olefin monomer, and/or may comprise a ring-opening polymer of cyclic olefin monomer units, the latter being preferred.

A cyclic olefin monomer unit forms a cyclic structure of carbon atoms and carbon-carbon double bonds, examples whereof include but are not limited to norbornene based monomer units and monocyclic monomer units, a norbornene based monomer unit being preferred. The norbornene based monomer unit has a norbornene ring, and may for instance include 2-norbornene, norbornadiene and other bicyclic compounds; dicyclopentadiene (DCPD), dihydrodicyclopentadiene and other tricyclic compounds; tetracyclododecene, ethylidenetetracyclododecene, phenyltetracyclododecene and other tetracyclic compounds; tricyclopentadiene and other pentacyclic compounds; tetracyclopentadiene and other heptacyclic compounds; alkyl substituted compounds, such as methyl, ethyl, propyl and butyl substituted compounds, alkylidene substituted compounds, such as ethylidene substituted compounds, and aryl substituted compounds, such as phenyl and tolyl substituted compounds; and derivatives thereof having for instance an epoxy group, a methacryl group, a hydroxyl group, an amino group, a carboxyl group, a cyano group, a halogen atom, and others. The cyclic olefin preferably comprises a dicyclopentadiene unit.

Monocyclic cyclic olefin monomer units may also be employed, suitable examples thereof comprising cyclobutene, cyclopentene, cyclooctene, cyclododecene, 1,5-cyclooctadiene and other monocyclic cyclic olefins, and substitution compounds and derivatives having polar groups like those mentioned as examples for the norbornene based monomer units. Such cyclic olefin monomers may be used alone or in combination with another or more types. Suitable linear olefin monomer units that may be polymerized via addition polymerization with the above cyclic olefin monomer units include but are not limited to ethylene, propylene, 1-butene, 1-pentene, 1-hexene, 1-octene, 2-pentene, and 1,4-hexadiene for instance. The amount of the linear olefin monomer units used is preferably lower than 50 wt %, more preferably lower than 20 wt %, and more preferably lower than 10wt % of the total amount of the cyclic olefin and linear olefin monomer units.

Apart from the cyclic olefin monomer units, the curable composition further comprises the cyclic olefin metathesis polymerization catalyst system as claimed, preferably in an amount of 30-1000 ppm relative to the total weight of the composition. This amounts to a preferred amount of the metalate of about 0.01 to 100 millimole metalate per mole of total monomer, preferably 0.1 to 10 millimole per mole of total monomer. The molar ratio of the alkoxy- or aryloxyalkylaluminum halide to the metalate is not particularly critical and may be selected in the range of about 1:10 to about 200:1, preferably from 2:1 to 40:1 of the alkoxy- or aryloxyalkylaluminum halide to the metalate.

The olefin metathesis polymerization catalyst system may be used in any suitable form, including a form in which it is dissolved or suspended in a solvent. Suitable solvents include linear aliphatic hydrocarbons such as n-pentane, n-hexane, n-heptane, or liquid paraffin, as well as alicyclic hydrocarbons such as cyclopentane, cyclohexane, alkyl substituted cyclohexane, di- and tricycloheptane,and cyclooctane to name a few, aromatic hydrocarbons such as benzene, toluene, xylene and others; nitrogen-containing solvents such as nitromethane, nitrobenzene, and acetonitrile, and oxygen-containing solvents such as diethyl ether and tetrahydrofuran. As already noted above, the olefin metathesis polymerization catalyst system is preferably soluble in the cyclic olefin monomer.

The curable composition preferably may also contain a catalyst retarder capable of extending the shelf lifetime before curing starts. Polymerization reaction retarders are well known in the art and may include but are not limited to phosphite compounds.

The composition may also comprise a chain transfer agent, for instance a linear olefin having substituted groups. Suitable chain transfer agents include vinylnorbornene, 1-hexene, 2-hexene and other aliphatic olefins; styrene, divinylbenzene, and other vinyl aromatic olefins; olefins having alicyclic hydrocarbon groups such as vinylcyclohexane; vinylethers; methylvinylketone, as well as substituted (meth)acrylic acids and their salts, such as vinyl(meth)acrylate, allyl(meth)acrylate, and compounds such as allyltrivinylsilane, allylmethyldivinylsilane, allyldimethylvinylsilane, and 4-vinylaniline. Such chain transfer agents may be used alone or in combination and are generally added in an amount ranging from 0.01 to 10 pbw (parts by weight), and preferably 0.1 to 5 pbw with respect to 100 pbw of the cyclic olefin monomer units.

Other additives may also be added to the composition such as flame retardants, light stabilizers, pigments, dyes, pigments and other colorants, as well as foaming agents for instance. Suitable flame retardants include but are not limited to phosphorus, nitrogen and halogen containing flame retardants, metal hydroxides such as aluminum hydroxide for instance, and antimony compounds such as antimony trioxide.

In preferred embodiments, fillers may be added to the composition of the present invention. Both inorganic and organic fillers may be used without any limitation, whereby an inorganic filler is preferred. Suitable inorganic fillers for instance include metal particles of iron, copper, nickel, gold, silver, aluminum, lead, and tungsten; carbon particles such as carbon black, graphite, activated carbon, carbon micro-balloons and the like; inorganic oxide particles such as silica, alumina, titanium oxide, iron oxide, zinc oxide, magnesium oxide, and the like; inorganic carbonate particles such as calcium carbonate and magnesium carbonate; calcium sulfate; inorganic silicate particles such as talc, clay, mica, kaolin, fly ash, montmorillonite, calcium silicate, and glass particles; as well as particles of titanate, aluminum nitride and silicon carbide.

Suitable organic fillers may for instance comprise wood, starch, lignin, organic pigment, and polymer particles such as those of polystyrene, polyamide, polyolefins such as polyethylene and polypropylene, polyvinylchloride, elastomers and/or waste polymers. It is also possible to add functional fillers, such as piezoelectric ceramics, fillers that change static/conductive properties such as carbon nanotubes, and rheology modifiers. The fillers may be provided with a sizing composition.

The composition may also comprise reinforcing fibers. Suitable reinforcing fibers to be used can be chosen within wide ranges. It is possible for instance to use inorganic fibers, such as glass fibers, carbon and graphite fibers, alumina fibers, tungsten fibers, molybdenum fibers, titanium fibers, steel fibers, boron fibers, silicon carbide fibers, and silica fibers. Other suitable fibers include organic fibers such as aramid fibers, ultra-high molecular weight polyethylene fibers, liquid crystalline and other polyester fibers, and the like, as well as natural fibers and reinforcements. Preferred reinforcing fibers comprise glass and carbon fibers, of which E-glass, R-glass, S-glass and S2-glass fibers are used most preferably.

The reinforcing fibers can be applied in any physical form, i.e. as mono- and multifilament, or in the form of strands and yarns, as woven fabric or according to any other textile structure, as short fibers or as continuous fibers, or in the form of a pre-impregnated sheet ('prepreg'). Any combination of different types of fibers is also possible. The amount of the reinforcing fibers may be chosen within wide ranges, but suitable amounts generally range from 30 - 70 vol.%.

In yet another aspect of the invention, a method of manufacturing a molded article of a curable composition as claimed is provided, the method comprising:
a) providing the curable composition by combining the cyclic olefin and the olefin metathesis polymerization catalyst system in a mold;
b) subjecting the composition to conditions effective to promote an olefin metathesis reaction of the cyclic olefin in the closed mold; and
c) taking the cured composition out of the mold to obtain the molded article.

Methods of manufacturing the molded articles may include but are not limited to those formed by state-of-the-art manufacturing techniques, such as casting, centrifugal casting, pultrusion molding, injection pultrusion molding, rotational molding, and open mold molding. In an embodiment of the invention, a method is provided comprising the step of injecting the composition into a closed mold, wherein the mold may be provided with reinforcing fibers prior to the injection of the composition. Other suitable techniques include reaction injection molding (RIM), resin transfer molding (RTM), vacuum assisted resin infusion (VARI), Seeman's Composite Resin Infusion Molding Process (SCRIMP), Reinforced Reaction Injection Molding (RRIM), Structural Reaction Injection Molding (SRIM), thermal expansion transfer molding (TERM), resin injection recirculation rnolding ( RICM), controlled atmospheric pressure resin infusion (CAPRI), and the like.

Subjecting the composition to conditions that promote an olefin metathesis reaction of the cyclic olefin involves heating the mold and composition to a suitable curing temperature during a suitable time interval, optionally at a pressure above 0.1 MPa. The heating temperature in an embodiment of the method is in the range of room temperature (RT) to 200 °C, more preferably 30 °C to 100 °C, even more preferably 60 °C to 80 °C. The heating times preferably are in a range of 1 to 60 minutes, more preferably 2 to 30 minutes, even more preferably 5 to 10 minutes. The pressure applied during molding may be selected in accordance with the manufacturing method used and may be as low as 0.1 to 0.5 MPa, for instance when using RTM. Vacuum or reduced pressures may also be used.

The molded article may be used in a variety of applications, including but not limited to aerospace components, marine components, automotive components, sporting goods, electrical components, medical components, and military components. A particularly preferred application includes a molded article in the form of a film. Polymeric films are defined as thin continuous materials with a relatively low thickness, typically from 10 µm up to 4 mm. They are typically provided on a roll.

A particularly useful embodiment provides a method wherein the molded article after step c) has a glass transition temperature T_{g} equal or higher than the mold temperature, preferably above 60 °C, more preferably above 80 °C, even more preferably above 100 °C, and most preferably above 120°C. The inventors have surprisingly found out that it is possible to produce an article of a cyclic olefin having the claimed properties. It turns out that the invented catalyst system also allows to produce parts with flash parts having a relatively high T_{g}. This embodiment greatly facilitates removal of the flash parts, which is an additional step in a preferred embodiment of the method further comprising the step of removing the flash parts.

The method of the invention and the catalyst system as claimed may be used to produce improved molded articles. In one embodiment, the molded article is obtainable by the method and is characterized in that a smallest or an average thickness of the molded article apart from optional flash parts is between 0.2 and 4 mm, more preferably between 0.2 and 2 mm, even more preferably between 0.2 and 1 mm, and most preferably between 0.2 and 0.5 mm. An example of such a molded article comprises a film. In another embodiment, the molded article is obtainable by the method and comprises flash parts, the glass transition temperature T_{g} of which is above 60 °C, more preferably above 80 °C, even more preferably above 100 °C, and most preferably above 120 °C.

### EXAMPLES

The present invention will now be described more specifically with reference to examples and comparative experiments, without however being limited to these examples. It is to be noted that, in the examples and comparative experiments, "parts" and "%" are based on weight basis unless otherwise noted. The invention is further illustrated by the following figures in which:
Figure 1 represents a graphical representation of the XiMo Cone Angle as a steric parameter introduced according to an embodiment of the invention to characterize the steric bulk of alkoxide ligands in both transition metal and main-group metal complexes;
Figure 2 is a graph representing polydicyclopentadiene yield as a function of time in DCPD ROMP catalysed by a pMo/[(ClCH₂)₂CHOAlEtCl]₂ ill-defined system in D8-toluene, at 25 °C ([Mo]/[Al]/[DCPD] = 0.00025, 0.001, 0.033 mol/L);
Figure 3 is a graph representing polydicyclopentadiene yield as a function of time in DCPD ROMP catalysed by a pMo/[(*rac*)-(CF₃)MeCHOAlEtCl]₂ ill-defined system in D8-toluene, at 25 °C ([Mo]/[Al]/[DCPD] = 0.00025, 0.001, 0.033 mol/L); and finally
Figure 4 represents the kinetic curves of Figures 2 and 3 combined in one graph for comparison.

### Methods and Definitions

### XiMo Cone Angle (XCA; in degrees)

XiMo Cone Angle is a steric parameter for alkoxide ligands in d-block and p-block metal complexes that has been introduced by the inventors to characterize the steric bulk of alkoxide ligands in both transition metal and main-group metal complexes, in particular in aluminum complexes of alkoxide ligands as claimed. XCA has been adopted from the concept of Tolman Cone Angle (C. A. Tolman J. Am. Chem. Soc., 1970, 92, 2956-2965), a widely-used steric parameter for tertiary phosphines coordinated to transition metals. However, in the case of XCA, the original definition has been modified to take into account that the symmetry of σ-donation is different in the case of oxygen donor atoms compared to phosphorous donor atoms.

XCA is the opening angle of the cone whose apex is the oxygen atom of the alkoxide ligand, and whose lateral surface touches the outermost atoms of the alkoxide ligand. If the alkoxide ligand has C₃ᵥ symmetry (R₃CO⁻), the opening angle of one single cone is used as the steric parameter. In the case of an asymmetric alkoxide (RR'R"CO⁻) the average of the cone angles of the corresponding C₃ᵥ symmetric alkoxides (R₃CO⁻, R'₃CO⁻, R"₃CO⁻) will define the steric bulk of the ligand.

A stepwise determination of the steric parameter with the aid of molecular modeling is disclosed below. The molecular modeling has been carried out by Dr. Ádám Madarász and Prof. Imre Pápai from the Institute of Organic Chemistry of the Hungarian Academy of Sciences. Importantly, unlike in the case of the Tolman Cone Angle, calculating the XiMo Cone Angle does not directly involve the metal the alkoxide is coordinated to. However, since the conformation of the alkoxide used for the calculations derives from the optimized structure of the metal complex of interest, the metal and the other ligands indirectly do influence the calculated cone angle.

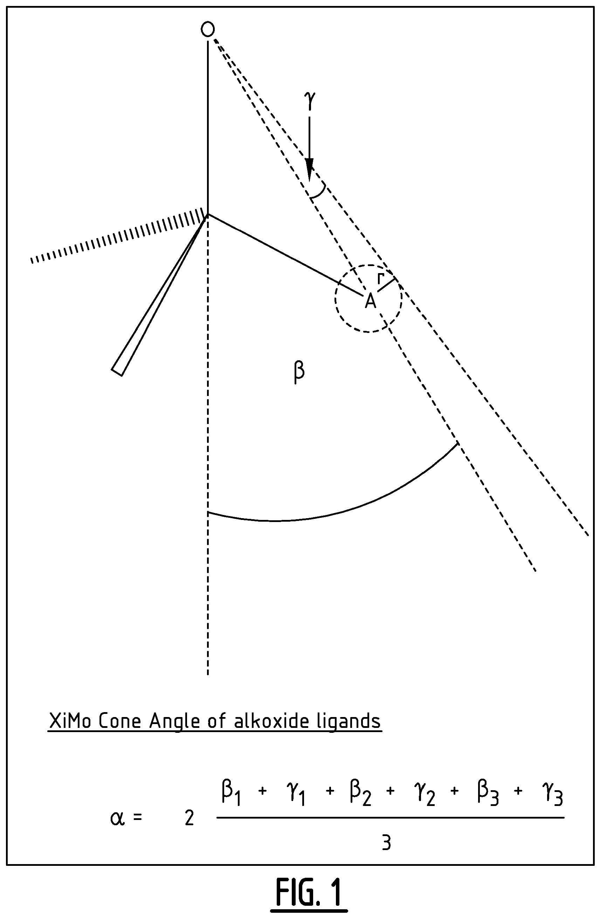

Referring to figure 1, the steps are as follows:
1. Find the most stable conformation of the alkoxide ligand in the desired complex.
2. Determine β angles from the structure. β is the angle between the O-C bond and O-A line segment, wherein A is the outermost atom of the group bound to C-O (determining the β angles consider the center of the O, C-O and A atoms.)
3. Determine γ-s from the O-A distance and from r, the Van der Waals radius of A, sin γ = r/A.
4. If the three moieties bound to the C-O atom of the alkoxide are the same, the alkoxide has C₃ᵥ symmetry, and then a right circular cone will cover the ligand. In that case α = 2 (β + γ). In the case when three different moieties are bound to the C-O atom, the steric parameter is defined as the average of the cone angles of the C₃ᵥ symmetrical alkoxides derived of each moiety. Technically, the average of the three β + γ half angles is taken, and the average half angle is multiplied with two.

### The Brönsted acidity of the alcohol (pKa)

In the study leading to the present invention, the electronic nature (electron donor capacity) of the alkoxide ligands towards the metal (Al, specifically) is characterized by the Brönsted acidity of the corresponding alcohols. The inventors assumed that the electron donation of the alkoxide oxygen towards the metal (Al, specifically) correlates with the polarity of the O-M bond (wherein M=metal), which in turn correlates with the polarity of the O-H bonds in the corresponding alcohols, that is, with the Brönsted acidity of the alcohols. The pKa values were calculated considering dimethylsulfoxide (DMSO) as solvent.

### GLB, descriptor of the Lewis basicity of functional groups in the alkoxide backbone (in kcal/mol)

The inventors have observed that the Lewis basicity of certain heteroatoms or functional groups present in the backbone of the alkoxide ligands has a significant impact on the catalytic performance of the catalyst system. The inventors have introduced the descriptor GLB to characterize the Lewis basicity of such heteroatoms or functional groups. The GLB of said heteroatoms or functional groups has been defined as the Gibbs free energy of complexation between a model compound X containing the given heteroatom or functional group as Lewis basic functionality and AlCl₃ as a model Lewis acid, according to the following reaction:

| | |
|---|---|
| X + AlCl₃ → [XAlCl₃] | Δ*G* (in kcal/mol) = GLB |

The model compounds X have been defined as compounds derived from the given heteroatom or functional group wherein all free valences of the given heteroatoms or functional groups are engaged with methyl groups, and are listed in Table 1, together with the calculated Δ*G*-s (GLB-s) of the model Lewis acid-base reactions.

**Table 1: Computed GLB data**

| Functional group X | GLB (kcal/mol) |
|---|---|
| CH₄ | +4.0 |
| Cl₃CMe | +0.2 |
| F₃CMe | -1.5 |
| ClMe | -6.7 |
| FMe | -11.6 |
| SMe₂ | -19.7 |
| MeCOOMe | -25.0 |
| OMe₂ | -25.7 |
| NCMe | -26.6 |
| NMe₃ | -36.7 |

### EXAMPLES 1: SYNTHESIS AND CHARACTERIZATION OF THE AL-BASED CO-CATALYSTS OF THE ILL-DEFINED MO-BASED CATALYTIC SYSTEM FOR THE RING-OPENING METATHESIS POLYMERIZATION OF DICYCLOPENTADIENE (DCPD)

### Method A

Note that although diethylaluminum chloride (DEAC) physically exists as the dimer [AlEt₂Cl]₂, in terms of stoichiometry the molecule was considered as the monomer AlEt₂Cl.

DEAC (125 microL, 121 mg, 1 mmol) was dissolved in pentane (5 mL) in a 30-mL vial equipped with a magnetic stirring bar. The vial was sealed with a septum, but the septum was pierced with a needle to avoid potential pressure increase in the vial during the reaction. At room temperature, a R¹OH alcohol (1 mmol) dissolved in pentane (5 mL) was added with a syringe through the septum in a slow, drop-wise manner over a period of ca. 15 minutes. Note that in many cases no EtH development could visually be observed. The reaction mixtures were stirred at room temperature overnight. All volatiles were evaporated at reduced pressure, typically yielding the crude products as colorless oil or white solid. No further purification was attempted; therefore, yields are not given. Nonetheless, mass balance was typically checked, and the mass of the isolated material was found to be within the ±10% range of the theoretical yield of the given target. The crude products were analyzed by 1D and 2D NMR techniques, and they were typically found to be the *cis,trans-*[Al(OR)EtCl]₂. They were characterized by ¹H, ¹³C{¹H}, and ¹⁹F{¹H} (if applicable) NMR.

Note that rapid addition of the alcohol to DEAC did not alter the composition of the co-catalyst.

Further note that in the case of racemic chiral alcohols the number of stereoisomers of [Al(OR)EtCl]₂ increases, and in most cases, they have not been characterized individually by NMR. Also, note that the presence of certain functional groups in the alcohols promoted co-catalyst decomposition. Depending on the rate of decomposition, the decomposing co-catalysts could or could not be characterized by NMR, and could or could not be used to promote the desired ROMP reactions. Such structural features were the benzyl alcohols, or the presence of - CH₂F functionality (Examples 1.2, 1.7).

### Method B

Analogous to Method A, but benzene was used as the solvent of the alcohol.

### Examples 1.1 to 1.10

### Example 1.1. Reaction of 1,3-dichloro-2-propanol (1,3-DCP) with diethylaluminium chloride at 1:1 stoichiometry:

The reaction was carried out according to Method A. A white solid was obtained. The main products were identified as *cis,trans-*{Al[OCH(CH₂Cl)₂]EtCl}₂; cis:trans = 45:55. Unidentified byproducts were present in an amount of ca. 10%.

NMR characteristics were as follows:
***Cis* dimer** H NMR (400 MHz, 300 K, C₆D₆):(ppm) 3.91 (m, 2H, OC**H**(CH₂Cl)₂), 3.35 (dd, 3*J* = 3.4 Hz, 2*J* = 11.8 Hz, 4H, OCH(CH***H***Cl)₂), 3.2 (dd, *3J =* 6.5 Hz, 2*J* = 11.8 Hz, 4H, OCH(CH***H***Cl)₂), -0.41 (s, 6H, Al- C**H₃**); ^{13C} NMR (75 MHz, 298 K, C₆D₆): (ppm) 74.3 (O**C**H(CH₂Cl)₂), 43.4 (OCH(**C**H₂Cl)₂), -9.45 (Al-**C**H₃); ²⁷Al NMR (104 MHz, 300 K, C₆D₆): δ (ppm) 119 (ω_{1/2} = 3.2 kHz)
***Trans* dimer** ¹H NMR (400 MHz, 300 K, C₆D₆):(ppm) 3.84 (m, 2H, OCH(C**H**₂Cl)₂), 3.55 (dd, 3*J* = 3.8 Hz, 2*J* = 11.5 Hz, 2H, OCH(CH***H***Cl)₂), 3.34 (m, 4H, OCH(CH***H***Cl)₂), 3.28 (dd, 3*J =* 6.0 Hz, 2*J* = 12.1 Hz, 2H, OCH(C**H**₂Cl)₂), -0.36 (s, 6H, Al-C**H₃**); 13C NMR (75 MHz, 298 K, C₆D₆): (ppm) 74.1 (O**C**H(CH₂Cl)₂), 43.8 (O**C**H(CH₂Cl)₂), -9.65 (Al-**C**H₃); ²⁷Al NMR (104 MHz, 300 K, C₆D₆): δ (ppm) 119 (ω_{1/2} = 3.2 kHz)

### Example 1.2. Reaction of rac-1-phenylethanol ) with diethylaluminium chloride at 1:1 stoichiometry:

The reaction was carried out according to Method B. A colorless oil was obtained, which turned yellow upon standing. The main products were stereoisomers of {Al[1-phenylethoxy]EtCl}₂. Several isomers were present that were not characterized individually.

### Example 1.3. Reaction of 2,4-dimethyl-3-pentanol with diethylaluminium chloride at 1:1 stoichiometry:

The reaction was carried out according to Method B. A colorless oil was obtained. The main products were identified as *cis,trans*-{Al(2,4-dimethyl-3-pentoxy)EtCl}₂; cis:trans = 33:67. Unidentified byproducts were present in an amount of ca. 27%. Cis-isomer was present in an amount of ca. 33%.

The NMR results were as follows: ¹H-NMR (C₆D₆, 300 MHz): d 0.26 (q, 4H, CH₂ Et), 0.85 (d, 12H, CH₃ alkoxide), 0.98 (d, 12H, CH₃ alkoxide), 1.34 (t, 6H, CH₃ Et), 3.43 ppm (t, 2H, OCH). ¹³C{¹H}-NMR (C₆D₆, 75 MHz): d 2 (br, CH₂ Et), 8.9 (CH₃ Et), 18.6 (CH₃ alkoxide), 19.4 (CH₃ alkoxide), 31.5 (CH), 89.31 ppm (OCH), trans-isomer (ca. 67%).

¹H-NMR (C₆D₆, 300 MHz): d 0.40 (q, 4H, CH₂ Et), 0.73 (d, 12H, CH₃ alkoxide), 0.87 (d, 12H, CH₃ alkoxide), 1.00 (d, 12H, CH₃ alkoxide), 1.07 (d, 12H, CH₃ alkoxide), 1.36 (t, 6H, CH₃ Et), 3.49 ppm (dd, 2H, OCH).

¹³C{¹H}-NMR (C₆D₆, 75 MHz): d 2 (br, CH₂ Et), 8.8 (CH₃ Et), 17.7 (CH₃ alkoxide), 19.2 (CH₃ alkoxide), 19.4 (CH₃ alkoxide), 20.0 (CH₃ alkoxide), 31.2 (CH), 31.9 (CH), 89.26 ppm (OCH).

### Example 1.4. Reaction of (rac)-trans-2-chloro-cyclohexanol with diethylaluminium chloride at 1:1 stoichiometry:

The reaction was carried out according to Method B. A white solid was obtained. The main products were stereoisomers of [Al(OR)]EtCl}₂ (R = 2-chloro-cyclohexyl). Several stereoisomers; not characterized individually.

### Example 1.5. Reaction of (R)-1-chloro-2-propanol with diethylaluminium chloride at 1:1 stoichiometry:

The reaction was carried out according to Method A. A white solid was obtained. The main products were identified as *cis,trans*-{Al[OCH(CH₂Cl)Me]EtCl}₂; cis:trans = 40:60. Unidentified byproducts: <5%. cis-isomer was present in an amount of ca. 40%.

The NMR results were as follows:
¹H-NMR (C₆D₆, 300 MHz): d 0.26 (q, 4H, CH₂ Et), 1.07 (d, 6H, CH₃), 1.17 (t, 6H, CH₃ Et), 2.92 &3.15 (m, 4H, CH₂Cl), 3.92 ppm (m, 2H, CH).
¹³C{¹H}-NMR (C₆D₆, 75 MHz): d ca. 0.9 br (CH₂ Et), 8.47 (CH₃ Et), 20.02 (CH₃), 49.34 (CH₂Cl), 72.14 ppm (CH), trans-isomer (ca. 60%)
¹H-NMR (C₆D₆, 300 MHz): d 0.31 (q, 4H, CH₂ Et), 1.07 (d, 6H, CH₃), 1.23 (t, 6H, CH₃ Et), 2.92 &3.15 (m, 4H, CH₂Cl), 3.86 ppm (m, 2H, CH).
¹³C{¹H}-NMR (C₆D₆, 75 MHz): d ca. 0.9 br (CH₂ Et), 8.43 (CH₃ Et), 19.94 (CH₃), 19.98 (CH₃), 49.28 (CH₂Cl), 49.32 (CH₂Cl), 71.98 (CH), 72.17 ppm (CH).

### Example 1.6. Reaction of 1,3-dimethoxy-2-propanol with diethylaluminium chloride at 1:1 stoichiometry:

The reaction was carried out according to Method B. A white solid was obtained. The main products were identified as *cis,trans*-{Al[OCH(CH₂OMe)₂]EtCl}₂; cis:trans = 45:55. Unidentified byproducts: ca. 18%. Cis-isomer was present in an amount of ca. 45%.

The NMR results were as follows:
¹H-NMR (C₆D₆, 300 MHz): d 0.20 (q, 4H, CH₂ Et), 1.32 (t, 6H, CH₃ Et), 3.02 (s, 12H, OCH₃), 3.35 & 3.40 (ABqd, 8H, OCH₂), 4.43 ppm (quin, 2H, CH).
¹³C{¹H}-NMR (C₆D₆, 75 MHz): d ca. 0.5 br (CH₂ Et), 9.9 (CH₃ Et), 58.7 (OCH₃), 67.2 (CH), 72.1 ppm (OCH₂), trans-isomer (ca. 55%)
¹H-NMR (C₆D₆, 300 MHz): d 0.23 (q, 4H, CH₂ Et), 1.37 (t, 6H, CH₃ Et), 3.02 (s, 12H, OCH₃), 3.33 & 3.78 (ABqd, 4H, OCH₂), 3.47 & 3.52 (ABqd, 4H, OCH₂), 3.78 ppm (dddd, 2H, CH). ¹³C{¹H}-NMR (C₆D₆, 75 MHz): d ca. 0.5 br (CH₂ Et), 9.8 (CH₃ Et), 58.64 (OCH₃), 58.66 (OCH₃), 67.6 (CH), 71.7 (OCH₂), 72.1 ppm (OCH₂).

### Example 1.7. Reaction of 1,3-difluoro-2-propanol with diethylaluminium chloride at 1:1 stoichiometry:

The reaction was carried out according to Method B. A colorless oil was obtained that started to crystallize in a freezer. Partial decomposition was noted upon standing. The main products were identified as *cis,trans*-{Al[OCH(CH₂F)₂]EtCl}₂; cis:trans = 50:50. Unidentified byproducts: ca. 10%, and cis-isomer (ca. 50%)

The NMR results were as follows:
¹H-NMR (C₆D₆, 300 MHz): d 0.28 (q, 4H, CH₂ Et), 1.20 (t, 6H, CH₃ Et), 3.93 (ABqdd, ²J_{HF}= 47 Hz, J_{HH}=9.9, 4.9 Hz, 8H, CH₂F), 3.78 ppm (tquin, ³J_{HF}= 20 Hz, 2H, CH).
¹³C{¹H}-NMR (C₆D₆, 75 MHz): d 8.2 (CH₃ Et), 71.5 (t, CH), 81.3 ppm (dd, J_{CF}= 170, 6.5 Hz, CH₂F).
trans-isomer (ca. 50%)
¹H-NMR (C₆D₆, 300 MHz): d 0.31 (q, 4H, CH₂ Et), 1.24 (t, 6H, CH₃ Et), 4.02 & 4.09 (ABqdd, ²J_{HF}= 47 Hz, J_{HH}=10.5, 10.2, 5.3, 4.3 Hz, 8H, CH₂F), 3.65 ppm (m, 2H, CH).
¹³C{¹H}-NMR (C₆D₆, 75 MHz): d 8.2 (CH₃ Et), 71.4 (dd, CH), 81.0 ppm (dd, J_{CF}= 170, 6.0 Hz, CH₂F).

### Example 1.8. The reaction of t-butanol with diethylaluminium chloride at 1:1 stoichiometry:

The reaction was carried out according to Method B. Colorless crystals were obtained. The main products were identified as *cis,trans-*[Al(OCMe₃)EtCl]₂; cis:trans = 30:70. Unidentified byproducts: ca. 10%. The main products were characterized by their ¹H-NMR resonances. cis-isomer (ca. 30%).

The NMR results were as follows:
¹H-NMR (C₆D₆, 300 MHz): d 0.22 (q, CH2-Al), 1.18 (t, CH3CH2Al) ppm, 1.24 ppm (s, CH3-C). trans-isomer (ca. 70%)
¹H-NMR (C₆D₆, 300 MHz): d 0.29 (q, CH2-Al), 1.28 (t, CH3CH2Al), 1.23 ppm (s, CH3-C).

### Example 1.9. Reaction of 2-trifluoromethyl-2-propanol with diethylaluminium chloride at 1:1 stoichiometry:

The reaction was carried out according to Method B. White solid. The main products were identified as *cis,trans*-[Al(OCMe₂CF₃)EtCl]₂; cis:trans = 30:70. Unidentified byproducts: ca. 12%. cis-isomer (ca. 30%).

The NMR results were as follows:
¹H-NMR (C₆D₆, 300 MHz): d 0.29 (q, 4H, CH₂ Et), 1.14 (t, 6H, CH₃ Et), 1.38 ppm (q, ⁴*J*_{HF}=1.1 Hz, 12H, OC(CH₃)₂).
¹⁹F-NMR(C₆D₆, 300 MHz): d -81.6 (sept, ⁴*J*_{HF}=1.1 Hz, 6F)
¹³C{¹H}-NMR (C₆D₆, 75 MHz): d 1.6 (br, CH₂ Et), 7.7 (CH₃ Et), 22.81 (q, ³*J*_{CF}=1.3 Hz), 79.5 (q, ²*J*_{CF}=30.6 Hz, OC), 125.3 ppm (q, ¹*J*_{CF}=284 Hz, CF₃).
trans-isomer (ca. 70%)
¹H-NMR (C₆D₆, 300 MHz): d 0.26 (q, 4H, CH₂ Et), 1.18 (t, 6H, CH₃ Et), 1.28 (br, 6H, OC(CH₃)₂), 1.31 (br, 6H, OC(CH₃)₂).
¹⁹F-NMR(C₆D₆, 300 MHz): d -81.1 (br, 6F)
¹³C{¹H}-NMR (C₆D₆, 75 MHz): d 1.6 (br, CH₂ Et), 7.7 (CH₃ Et), 22.79 (q, ³*J*_{CF}=1.3 Hz), 22.84 (q, ³*J*_{CF}=1.3 Hz), 79.1 (q, ²*J*_{CF}=30.6 Hz, OC), 125.2 ppm (q, ¹*J*_{CF}=284 Hz, CF₃).

### Example 1.10 Reaction of 1,1,1-trifluoro-2-propanol with diethylaluminium chloride at 1:1 stoichiometry:

The reaction was carried out according to Method B. A white solid was obtained. The main products were identified as *cis-* and *trans*-[Al(OCHMeCF₃)EtCl]₂ stereoisomers (cis:trans = 53:47). Note that from the racemic alcohol, seven stereoisomers were formed, including two enantiomer pairs-unidentified byproducts: ca. 10%. NMR characterization gives chemical shift ranges. ¹H-NMR (C₆D₆, 300 MHz): d 0.22 (4H, CH₂ Et), 1.02 - 1.21 (12H, CH₃ Et and CH₃ alkoxide), 3.71-4.00 ppm (2H, CH).

¹⁹F{¹H}-NMR(C₆D₆, 300 MHz): d -79.34, -79.19, -78.92, -78.87, -78.78, -78.72 ppm (CF₃). ¹³C{¹H}-NMR (C₆D₆, 75 MHz): d -1.7 - 1.2 (CH₂ Et), 7.7 - 8.0 (CH₃ Et), 15.6 - 16.2 (CH₃ alkoxide), 69.9 - 71.8 (OC), 124.2 - 124.6 ppm (CF₃).

### EXAMPLES 2: POLYMERIZATION OF DCPD BY USING VARIOUS CO-CATALYST SYSTEMS

### A general method of in situ co-catalyst synthesis

In a glovebox, an equimolar quantity of diethylaluminum chloride and alcohol were introduced to 1 kg of liquid DCPD/TCPD mixture at RT. The mixture was stirred for 24 h at ambient temperature. The resulted co-catalyst solution in monomer was used for the polymerization reactions experiments depicted in Table 2. In most cases, the obtained co-cocatalyst solutions were transparent and colorless except for Entry 10 and 14.

### A general method of formulation preparation from isolated complex

The isolated Al-alkoxy complexes described in Example 1 were introduced to 1 kg of liquid DCPD/TCPD mixture at RT under inert atmosphere.

### A general method of the polymerization reaction test

100 g of co-catalyst solution obtained using the method described above, and 100g of polymolybdate solution in DCPD/TCPD mixture was introduced to a cartridge equipped with a static mixer. The cartridges were conditioned for 30 min at 30 °C. The injection of two solutions was done by using a pneumatic gun. The temperature acquisition was launched immediately after injecting.

Time to cure was measured as time from the end of injection until 100°C.

ΔT was calculated as the difference between the maximum and the initial temperature. The temperature difference is an indirect indication of monomer conversion in bulk conditions. Previous data showed that ΔT above 184°C corresponds to at least 95% conversion as judged from a TGA analysis.

**Table 2. Reactivity tests by using DCPD formulations based on various alcohols**

| **Entry** | **Alcohol** | **pKₐ(DMSO)** | **XCA** | **GLB** | **Time to cure(s)** | **ΔT(°C)** |
|---|---|---|---|---|---|---|
| 1 | 1.3 dichloro-2-propanol (1) | 25.75 | 185 | -6.7 | 91 | 193 |
| 1a | [AlClEt(1.3 dichloro-2-propoxy)]2-Example 1.1 | 25.75 | 185 | -6.7 | 90 | 193 |
| 2 | 1-chloro-2-propanol (2) | 28.04 | 187 | -6.7 | 243 | 187 |
| 3 | 1.1.1-trifluoro-2-propanol (3) | 24 | 160 | -1.5 | 62 | 193 |
| 3a | [AlClEt(1.1.1-trifluoro-2-propoxy)]2-Example 1.10 | 24 | 160 | -1.5 | 60 | 193 |
| 4 | 1-propanol (4) | 30.4 | 144 | +4.0 | 85 | 149 |
| *5* | (rac)-trans-2-chloro-cyclohexanol | 29.4 | 170.6 | -6.7 | 1240 | 184 |
| 6 | 1,3-dimethoxy2-propanol (6) | 27.13 | 176.1 | -25.7 | No reaction | - |
| 7 | 1.3-dioxan-5ol (7) | 27.3 | 176.1 | -25.7 | No reaction | - |
| 8 | 2-(dibutylamino)ethanol (8) | 29.25 | 183 | -26.6 | No reaction | - |
| 9 | 2,4-dimethylpentan-3-ol (9) | 31.21 | 219 | +4.0 | No reaction | - |
| 10 | 2-Cl-benzyl alcohol (10) | 27.28 | 174 | -6.7 | 170 | 150 |
| 11 | 2-Cl-benzylalcohol (10) after 1 week of storage at RT | 27.28 | 174 | -6.7 | 220 | 130 |
| 12 | 1,3-difluoropropan-2-ol (11) | 25.02 | 182 | -11.6 | Decomposition | - |
| 13 | *^{tert}*butanol (12) | 32.2 | 167.5 | +4.0 | No reaction | - |
| 13a | [AlClEt(^{tert}-butoxy)]2-Example 1.8 | 32.2 | 167.5 | +4.0 | No reaction | - |
| 14 | 1-phenylethanol (13) | 29.15 | 181.7 | 4.0 | 120 | 146 |
| 15 | 1-phenylethanol (13) after 1 month of storage | 29.15 | 181.7 | 4.0 | | 30 |

### Examples 2.1 to 2.13

### Example 2.1-2.3 (Table 2: Entry 1 to Entry 3).

The co-catalyst solution was stable during storage at ambient temperature and under an inert atmosphere for 1 year. The differences in the alcohol descriptors can rationalize the observed differences in the initiation rates. 1.1.1-trifluoro-2-propanol has the lowest pKa and XCA and the higher GLB values, thus giving the shortest time to cure combined with excellent monomer conversion.

### Examples 1a, 3a and 13a

The catalytic tests results obtained for by using the isolated Al complexes and generated in situ are identical.

### Example 2.4 (Table 2 Entry 4).

The reactivity data indicate rapid initiation but low monomer conversion (ΔT = 149°C, thus 35 °C below the target value). The pKa values of 1-propanol (4) are above 30; therefore, the corresponding co-catalyst performs poorly in the ROMP of DCPD.

### Example 2.5 (Table 2 Entry 5).

The reactivity data indicates very slow initiation in the tested conditions, mainly due to the high pKa values. At the same time, the maximum polymerization temperature was high, and ΔT reached the target value (184°C).

### Examples 2.6 to 2.8 (Table 2 Entry 6 to Entry 8).

The catalytic systems show no catalytic activity in the tested conditions due to heteroatom (O or N) in the alcohol moiety. The heteroatoms have a strong ability to bond to aluminum which shuts down their catalytic activity.

### Examples 2.9 to 2.10 (Table 2 Entry 9 and Entry 13)

The catalytic systems show no catalytic activity due to high pKa values of 2,4-dimethylpentan-3-ol (9) and *^{tert}*butanol (12),

### Example 2.11 (Table 2 Entry 10 and Entry 11).

The prepared *in situ* co-cocatalyst solution was transparent and light yellow. The reactivity data of the freshly prepared co-catalyst indicates a moderate initiation rate and low monomer conversion (ΔT = 150°C, thus 34 °C below the target value).

After two weeks of storage at ambient temperature and under an inert atmosphere, the co-catalyst solution turned to yellow, and the reactivity data showed slower initiation and lower monomer conversion.

### Example 2.12 (Table 2, Entry 14 and Entry 15)

The co-catalyst solution obtained using 1-phenylethanol turned orange shortly after the alcohol addition. Further, an orange-brown precipitate was generated during the storage at RT under an inert atmosphere. The corresponding aluminum complex undergoes self-decomposition in the tested conditions. The reactivity tests were repeated after one 1 month, and only a slight temperature increase due to the polymerization reaction was measured (Table 2, Entry 15),

### Example 2,13 (Table 2 Entry 12)

The co-catalyst turned to yellow orange 24 h after the alcohol addition. A similar self-decomposition of the aluminum complex was observed in Example 1.7.

### EXAMPLES 3: GLASS TRANSITION TEMPERATURE (TG) OF CURED BULK SAMPLES

Tg values of PDCPD (Table 2 Entry 1-4) were measured by using the DSC method (10 mg of polymer, heating rate 10°C/min). The DSC pan was weighed before and after the test to assess the weight loss during the heating cycle. The weight loss was attributed to monomer loss, thus converting the tested samples.

**Table 3. Tg values and monomer conversion by using DCPD formulation based on various alcohols**

| **Entry** | **Alcohol** | **pKa** | **XCA** | **GLB** | **Tg (°C)** | **% conversion** |
|---|---|---|---|---|---|---|
| 1 | 1.3 dichloro-2-propanol (1) | 25.75 | 185 | -6.7 | 164 | 100 |
| 2 | 1-chloro-2-propanol (2) | 28.04 | 187 | -6.7 | 153 | 95 |
| 3 | 1.1.1-trifluoro-2-propanol (3) | 24 | 160 | -1.5 | 165 | 100 |
| 4 | 1-propanol (4) | 30.4 | 144 | +4.1 | 81 | 83% |
| 5 | 2-Cl-benzyl alcohol (10) | 27.28 | 174 | -6.7 | 80 | 80% |
| 6 | 1-phenylethanol (13) | 29.15 | 181.7 | | 73 | 78% |

The alcohols 1 and 3 with low pKa values formed the co-catalyst giving the highest performance, complete conversion, and the high Tg polymers.

Less acidic and slightly bulkier 1-chloro-2-propanol (2) formed a co-catalyst having decreased activity compared to alcohols 1 and 3.

The lowest acidity alcohol 4 performed poorly, and the DSC analysis showed only 8% of monomer conversion and a glass transition temperature of the obtained polymer of 81°C.

Disappointing results were obtained with alcohol 10 and 13 derivatives bearing a benzyl functionality. The interactions between the aluminum and the aromatic ring lead to a decreased stability of the corresponding complex and self-decomposition.

### EXAMPLES 5: GLASS TRANSITION TEMPERATURE (Tg) OF THIN FILMS IN THE PRESENCE OF SICL₄

0.1% of siliciumtetrachloride SiCl₄ was added to the co-catalyst solutions prepared according to Examples 3. Thin films with an average thickness of 0.3 mm were molded in a preheated aluminum mold at 60°C. The mold was opened within 180 s after monomer injection.

The Tg values were obtained by using the DSC method as described under Examples 3.

Results are depicted in Table 5.

**Table 5. The glass transition temperature of thin films molded at 60°C by using DCPD formulations based on various alcohols**

| **Alcohol structure** | **(1)** | **(3)** | **(4)** | **(10)** |
|---|---|---|---|---|
| **pKa** | 25.75 | 24.04 | 30.4 | 27.28 |
| **XCA** | 168 | 160.4 | 142 | 170 |
| **GLB** | -6.7 | --1.53 | 4.0 | -6.7 |
| **Aromatic ring** | - | - | - | Yes |
| **Film T_{g} ºC (molding at 60ºC)** | 62 | 64 | 10 | 30 |
| **Monomer conversion versus target value** | 98% | 100% | 50% | 80% |

The addition of SiCl₄ did not influence the glass transition temperature of the polymers obtained by using alcohols 1 and 3. In the case of 4 and 10, the effect of SiCl₄ was positive. However, with 0.1% of SiCl₄, the target T_{g} values were not reached in the tested conditions.

### EXAMPLES 6: COMPARATIVE KINETIC STUDIES ON THE DCPD ROMP REACTION CATALYZED BY THE {MOLYBDENUM PRE-CATALYST/[(ClCH₂)₂CHOAlEtCl]₂}AND THE {MOLYBDENUM PRE-CATALYST/[(CF₃)MeCHOAlEtCl]₂} SYSTEMS

To provide further evidence of the influence of the structure of the alcohol additive (that is, the structure of the alkoxide ligand of the aluminum co-catalyst) on the catalytic performance, we recorded the kinetic curves (conversion vs. time) of the DCPD ROMP reactions promoted by the (ClCH₂)₂CHOH- and *rac*-(CF₃)MeCHOH-derived catalytic systems. In these experiments, the catalytic systems were generated from the industrial molybdenum-based pre-catalyst and the corresponding (ClCH₂)₂CHOH- and *rac*-(CF₃)MeCHOH-derived aluminum co-catalysts, respectively (Scheme 1). The reactions were performed in NMR test tubes, and they were followed by ¹H-NMR. The reaction conditions were optimized to be able to obtain clear data sets that can serve to demonstrate the difference in reaction rates. Note that the chosen conditions prevented product precipitation, which could have rendered the results ambiguous.

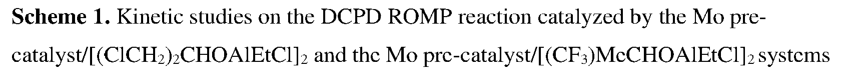

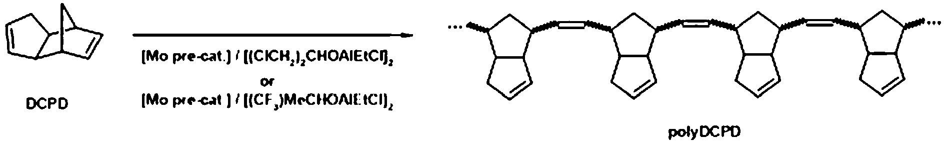

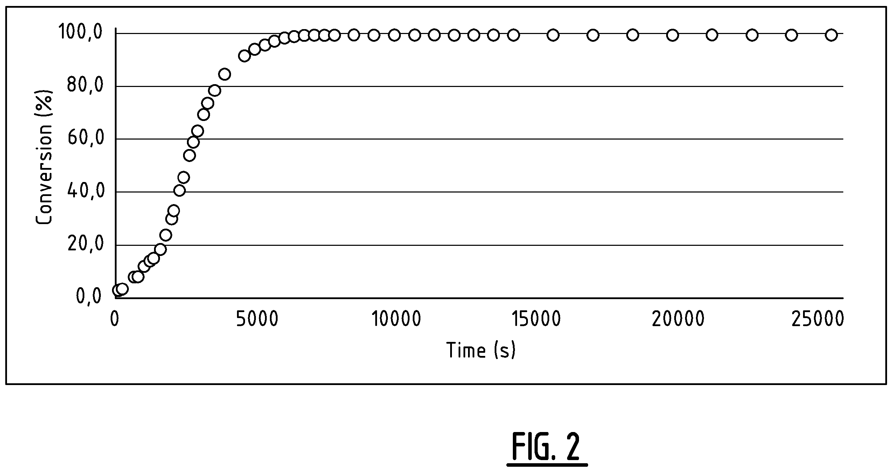

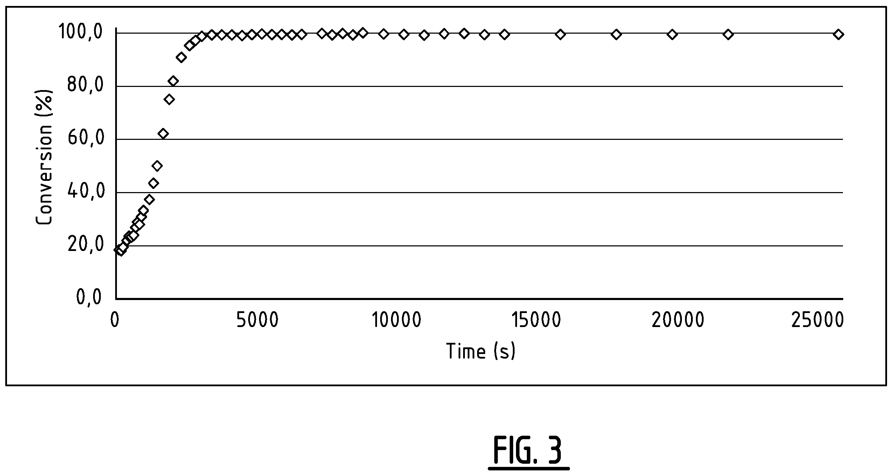

Under the applied conditions, the Mo pre-catalyst/[(CF₃)MeCHOAlEtCl]₂ ill-defined catalytic system proved considerably more active than the industrially used Mo pre-catalyst/[(ClCH₂)₂CHOAlEtCl]₂ catalytic system. While the (ClCH₂)₂CHOH-derived system requires more than 95 minutes to reach 98% conversion (Figure 2), the (*rac*)-(CF₃)MeCHOH-modified catalyst provides 99% conversion in 51 minutes. (Figure 3).

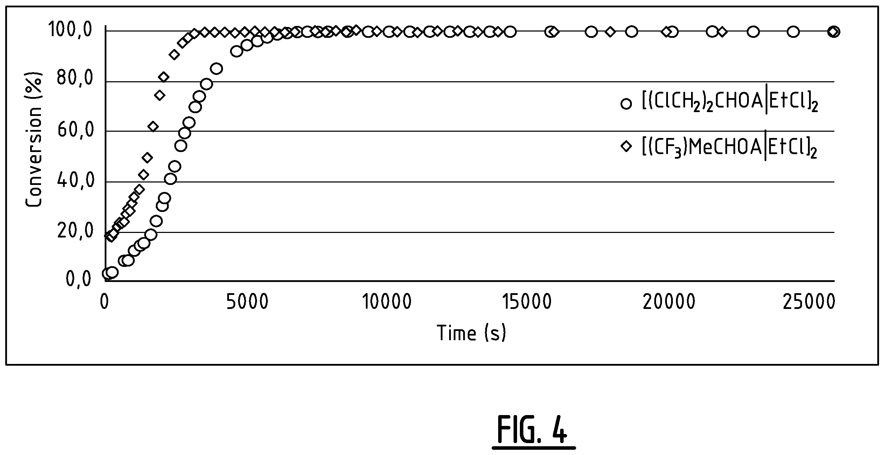

Plotting the two kinetic curves in the same graph gives even clearer evidence of the difference in the activity of the two systems (Figure 4).

The invention is not limited to the above-described embodiments and comprises modifications thereof, to the extent that these fall within the scope of the claims appended below.

## Claims

1. An olefin metathesis polymerization catalyst system comprising a metalate as pre-catalyst and an aluminum complex as co-catalyst, wherein the aluminum complex is an alkoxyalkylaluminum halide complex [(OR¹)(R²)AlX¹]ₙ wherein n is an integer in the range of from 1-3, R² is an alkyl, and X¹ is an halide, **characterized in that** OR¹ is an alkoxy ligand derivable from an alcohol HOR¹ having a pKa (calculated considering dimethylsulfoxide (DMSO) as solvent) in the range of from 18-28, wherein the alkoxy ligand OR¹ is functionalized with a halogen, wherein the functionalized alcohols selected from benzyl alcohols and alcohols comprising -CH₂F functionality are excluded,
wherein the halogen preferably is chlorine (Cl) or fluorine (F), more preferably fluorine (F), and wherein the alcohol HOR¹ is preferably selected from 1,1,1-trifluoro-2-propanol 1,1-difluoropropanol, and 1-chloro-2-propanol.

2. The catalyst system of claim 1, wherein the pKa of the alcohol HOR¹ is in the range of from 20-28, more preferably from 21-27, and most preferably from 22-26.

3. The catalyst system of claim 1 or 2, wherein R² is alkyl and X¹ is Cl.

4. The catalyst system of any one of the preceding claims, wherein the metalate is molybdate.

5. The catalyst system of any one of the preceding claims, wherein n = 2.

6. The catalyst system of any one of the preceding claims, wherein the alkoxy ligand OR¹ is derived from a primary or secondary alcohol HOR¹.

7. The catalyst system of any one of the preceding claims, wherein the alcohol HOR¹ has a steric bulk defined by the XCA cone angle, defined by the opening angle of the cone whose apex is the oxygen atom of the alkoxide ligand, and whose lateral surface touches the outermost atoms of the alkoxide ligand, as disclosed under Methods and Definitions, ranging from 160 to 200°, more preferably from 170 to 190°.

8. The catalyst system of any one of the preceding claims, wherein the GLB descriptor (in kcal/mol) of the heteroatoms or functional groups present in R¹ of alcohol HOR¹, defined as the Gibbs free energy of complexation between a model compound X containing the given heteroatom or functional group as Lewis basic functionality and AlCl₃ as a model Lewis acid, according to the following reaction:
| | |
|---|---|
| X + AlCl₃ → [XAlCl₃] | Δ*G* (in kcal/mol) = GLB |
is not lower than -12, more preferably not lower than -10, even more preferably not lower than -8, and most preferably not lower than -6.

9. The catalyst system of any one of the preceding claims, further comprising alkyl chlorosilane SiₓCl_{y}R_{z}, wherein R is O, O-alkyl, alkyl, aryl, and x, y, z may be from 1-10, in an amount of between 0 and 3 wt.% relative to the total amount of the catalyst system.

10. The catalyst system of claim 9, wherein the chlorosilane comprises siliciumtetrachloride and the catalyst system comprises at most 0.15 wt.% siliciumtetrachloride (SiCl₄), more preferably at most 0.12 wt.%, even more preferably at most 0.10 wt.%, and most preferably at most 0.06 wt.%, relative to the total amount of the catalyst system,
wherein the catalyst system preferably does not comprise siliciumtetrachloride.

11. The catalyst system of any of the preceding claims, wherein the catalyst is molybdate as pre-catalyst and [Al(1,1,1-trifluoro-2-propoxy)(Cl)(C₂H₅)]ₙ as co-catalyst, wherein n = 1 or 2.

12. A curable composition, comprising a cyclic olefin and an olefin metathesis polymerization catalyst system as claimed in any one of the preceding claims, wherein the cyclic olefin preferably comprises a dicyclopentadiene.

13. Method of manufacturing a molded article of a curable composition in accordance with claim 12, the method comprising:
a) providing the curable composition by combining the cyclic olefin and the olefin metathesis polymerization catalyst system in a mold;
b) subjecting the composition to conditions effective to promote an olefin metathesis reaction of the cyclic olefin in the closed mold; and
c) taking the cured composition out of the mold to obtain the molded article, preferably wherein the molded article after step c) has a glass transition temperature T_{g} equal or higher than the mold temperature, more preferably wherein the method further comprises the step of removing flash parts and wherein the molded article after step c) has a glass transition temperature T_{g} equal or higher than the mold temperature.

14. The method of claim 13, comprising the step of injecting the composition into the closed mold.

15. Molded article obtainable by the method of claim 13 or 14, wherein the molded article optionally has a smallest thickness, and the optional smallest or an average thickness of the molded article apart from optional flash parts is between 0.2 and 4 mm, more preferably between 0.2 and 0.5 mm.

## Patentansprüche

1. Olefinmetathese-Polymerisationskatalysatorsystem, umfassend ein Metallat als Präkatalysator und einen Aluminiumkomplex als Cokatalysator, wobei der Aluminiumkomplex ein Alkoxyalkylaluminium-Halogenid-Komplex [(OR¹)(R²)AlX¹]ₙ ist, wobei n eine ganze Zahl in dem Bereich von 1-3 ist, R² ein Alkyl ist, und X¹ ein Halogenid ist, **dadurch gekennzeichnet, dass** OR¹ ein Alkoxyligand ist, der von einem Alkohol HOR¹ ableitbar ist, der ein pKa (berechnet unter Berücksichtigung von Dimethylsulfoxid (DMSO) als Lösungsmittel) in dem Bereich von 18-28 aufweist, wobei der Alkoxyligand OR¹ mit einem Halogen funktionalisiert ist, wobei die funktionalisierten Alkohole, ausgewählt aus Benzylalkoholen und Alkoholen, die -CH₂F-Funktionalität umfassen, ausgeschlossen sind, wobei das Halogen vorzugsweise Chlor (Cl) oder Fluor (F) ist, mehr bevorzugt Fluor (F), und wobei der Alkohol HOR¹ vorzugsweise ausgewählt ist aus 1,1,1-Trifluor-2-propanol, 1,1-Difluorpropanol und 1-Chlor-2-propanol.

2. Katalysatorsystem nach Anspruch 1, wobei der pKa des Alkohols HOR¹ in dem Bereich von 20-28, mehr bevorzugt von 21-27 und am meisten bevorzugt von 22-26 liegt.

3. Katalysatorsystem nach Anspruch 1 oder 2, wobei R² Alkyl ist und X¹ Cl ist.

4. Katalysatorsystem nach einem der vorstehenden Ansprüche, wobei das Metallat Molybdat ist.

5. Katalysatorsystem nach einem der vorstehenden Ansprüche, wobei n = 2.

6. Katalysatorsystem nach einem der vorstehenden Ansprüche, wobei der Alkoxyligand OR¹ von einem primären oder sekundären Alkohol HOR¹ abgeleitet ist.

7. Katalysatorsystem nach einem der vorstehenden Ansprüche, wobei der Alkohol HOR¹ einen sterischen Anspruch aufweist, der durch den XCA-Kegelwinkel definiert ist, der durch den Öffnungswinkel des Kegels definiert ist, dessen Scheitel das Sauerstoffatom des Alkoxidliganden ist und dessen laterale Oberfläche die äußersten Atome des Alkoxidliganden berührt, wie unter Verfahren und Definitionen offenbart, in einem Bereich von 160 bis 200°, mehr bevorzugt von 170 bis 190°.

8. Katalysatorsystem nach einem der vorangehenden Ansprüche, wobei der GLB-Deskriptor (in kcal/mol) der Heteroatome oder funktionellen Gruppen, die in R¹ von Alkohol HOR¹ vorhanden sind, definiert als die Gibbs-freie Energie der Komplexierung zwischen einer Modellverbindung X, die das gegebene Heteroatom oder die funktionelle Gruppe als Lewisbasische Funktionalität enthält, und AlCl₃ als eine Lewis-Modellsäure, gemäß der folgenden Reaktion:
| | |
|---|---|
| X + AlCl₃ → [XAlCl₃] | Δ*G* (in kcal/mol) = GLB |
nicht niedriger als -12, mehr bevorzugt nicht niedriger als -10, noch mehr bevorzugt nicht niedriger als -8 und am meisten bevorzugt nicht niedriger als -6 ist.

9. Katalysatorsystem nach einem der vorstehenden Ansprüche, ferner umfassend Alkylchlorsilan SiₓCl_{y}R_{z}, wobei R O, O-Alkyl, Alkyl, Aryl ist und x, y, z von 1-10 sein können, in einer Menge zwischen 0 und 3 Gew.-%, bezogen auf die Gesamtmenge des Katalysatorsystems.

10. Katalysatorsystem nach Anspruch 9, wobei das Chlorsilan Siliciumtetrachlorid umfasst und das Katalysatorsystem höchstens zu 0,15 Gew.-% Siliciumtetrachlorid (SiCl₄), mehr bevorzugt höchstens zu 0,12 Gew.-%, noch mehr bevorzugt höchstens zu 0,10 Gew.-%, und am meisten bevorzugt höchstens zu 0,06 Gew.-%, bezogen auf die Gesamtmenge des Katalysatorsystems, umfasst, wobei das Katalysatorsystem vorzugsweise kein Siliciumtetrachlorid umfasst.

11. Katalysatorsystem nach einem der vorstehenden Ansprüche, wobei der Katalysator Molybdat als Präkatalysator und [Al(1,1,1-Trifluor-2-propoxy)(Cl)(C₂H₅)]ₙ als Cokatalysator ist, wobei n = 1 oder 2.

12. Härtbare Zusammensetzung, umfassend ein zyklisches Olefin und ein Olefinmetathese-Polymerisationskatalysatorsystem nach einem der vorstehenden Ansprüche, wobei das zyklische Olefin vorzugsweise ein Dicyclopentadien umfasst.

13. Verfahren zum Herstellen eines geformten Gegenstands aus einer härtbaren Zusammensetzung nach Anspruch 12, das Verfahren umfassend:
a) Bereitstellen der härtbaren Zusammensetzung durch ein Kombinieren des zyklischen Olefins und des Olefinmetathese-Polymerisationskatalysatorsystems in einer Form;
b) Aussetzen der Zusammensetzung gegenüber Bedingungen, die wirksam sind, um eine Olefinmetathese-Reaktion des zyklischen Olefins in der geschlossenen Form zu fördern; und
c) Herausnehmen der gehärteten Zusammensetzung aus der Form, um den geformten Gegenstand zu erhalten, vorzugsweise wobei der geformte Gegenstand nach Schritt c) eine Glasübergangstemperatur T_{g} gleich oder höher als die Formtemperatur aufweist, mehr bevorzugt wobei das Verfahren ferner den Schritt eines Entfernens von Gratteilen umfasst und wobei der geformte Gegenstand nach Schritt c) eine Glasübergangstemperatur T_{g} gleich oder höher als die Formtemperatur aufweist.

14. Verfahren nach Anspruch 13, umfassend den Schritt eines Einspritzens der Zusammensetzung in die geschlossene Form.

15. Geformter Gegenstand, erhältlich durch das Verfahren nach Anspruch 13 oder 14, wobei der geformte Gegenstand optional eine kleinste Dicke aufweist, und die optionale kleinste oder eine durchschnittliche Dicke des geformten Gegenstands abgesehen von optionalen Gratteilen zwischen 0,2 und 4 mm, mehr bevorzugt zwischen 0,2 und 0,5 mm liegt.

## Revendications

1. Système catalytique de polymérisation par métathèse d'oléfine comprenant un métalate en tant que précatalyseur et un complexe d'aluminium en tant que cocatalyseur, dans lequel le complexe d'aluminium est un complexe d'halogénure d'alcoxyalkylaluminium [(OR¹)(R²)AlX¹]ₙ dans lequel n est un nombre entier compris dans la plage allant de 1 à 3, R² est un alkyle, et X¹ est un halogénure, **caractérisé en ce que** OR¹ est un ligand alcoxy dérivable d'un alcool HOR¹ ayant un pKa (calculé en prenant en compte le diméthylsulfoxyde (DMSO) en tant que solvant) compris dans la plage allant de 18 à 28, dans lequel le ligand alcoxy OR¹ est fonctionnalisé avec un halogène, dans lequel les alcools fonctionnalisés choisis parmi des alcools benzyliques et des alcools comprenant la fonctionnalité -CH₂F sont exclus, dans lequel l'halogène est de préférence le chlore (Cl) ou le fluor (F), plus préférablement le fluor (F), et dans lequel l'alcool HOR¹ est de préférence choisi parmi 1,1,1-trifluoro-2-propanol, 1,1-difluoropropanol, et 1-chloro-2-propanol.

2. Système catalytique selon la revendication 1, dans lequel le pKa de l'alcool HOR¹ est compris dans la plage allant de 20 à 28, plus préférablement de 21 à 27, et le plus préférablement de 22 à 26.

3. Système catalytique selon la revendication 1 ou 2, dans lequel R² est alkyle et X¹ est Cl.

4. Système catalytique selon l'une quelconque des revendications précédentes, dans lequel le métalate est le molybdate.

5. Système catalytique selon l'une quelconque des revendications précédentes, dans lequel n = 2.

6. Système catalytique selon l'une quelconque des revendications précédentes, dans lequel le ligand alcoxy OR¹ est dérivé d'un alcool primaire ou secondaire HOR¹.

7. Système catalytique selon l'une quelconque des revendications précédentes, dans lequel l'alcool HOR¹ a un encombrement stérique défini par l'angle de cône XCA, défini par l'angle d'ouverture du cône dont le sommet est l'atome d'oxygène du ligand alcoxyde et dont la surface latérale touche les atomes les plus externes du ligand alcoxyde, comme indiqué dans Méthodes et Définitions, compris dans une plage allant de 160 à 200°, plus préférablement de 170 à 190°.

8. Système catalytique selon l'une quelconque des revendications précédentes, dans lequel le descripteur GLB (en kcal/mol) des hétéroatomes ou groupes fonctionnels présents dans R¹ de l'alcool HOR¹, défini en tant qu'énergie libre de Gibbs de la complexation entre un composé modèle X contenant l'hétéroatome ou groupe fonctionnel donné en tant que fonctionnalité basique de Lewis et AlCl₃ en tant qu'acide de Lewis modèle, selon la réaction suivante :
| | |
|---|---|
| X + AlCl₃ → [XAlCl₃] | Δ*G* (en kcal/mol) = GLB |
n'est pas inférieur à -12, plus préférablement non inférieur à -10, encore plus préférablement non inférieur à -8, et le plus préférablement non inférieur à -6.

9. Système catalytique selon l'une quelconque des revendications précédentes, comprenant en outre l'alkyl chlorosilane SiₓCl_{y}R_{z}, dans lequel R est O, O-alkyle, alkyle, aryle, et x, y, z peuvent aller de 1 à 10, en une quantité comprise entre 0 et 3 % en poids par rapport à la quantité totale du système catalytique.

10. Système catalytique selon la revendication 9, dans lequel le chlorosilane comprend du tétrachlorure de silicium et le système catalytique comprend au plus 0,15 % en poids de tétrachlorure de silicium (SiCl₄), plus préférablement au plus 0,12 % en poids, encore plus préférablement au plus 0,10 % en poids, et le plus préférablement au plus 0,06 % en poids, par rapport à la quantité totale du système catalytique, dans lequel le système catalytique ne comprend pas, de préférence, de tétrachlorure de silicium.

11. Système catalytique selon l'une quelconque des revendications précédentes, dans lequel le catalyseur est le molybdate en tant que pré-catalyseur et [Al(1,1,1-trifluoro-2-propoxy)(Cl)(C₂H₅)]ₙ en tant que co-catalyseur, dans lequel n = 1 ou 2.

12. Composition durcissable, comprenant une oléfine cyclique et un système catalytique de polymérisation par métathèse d'oléfine selon l'une quelconque des revendications précédentes, dans laquelle l'oléfine cyclique comprend de préférence un dicyclopentadiène.

13. Procédé de fabrication d'un article moulé à partir d'une composition durcissable selon la revendication 12, le procédé comprenant :
a) la fourniture de la composition durcissable en combinant l'oléfine cyclique et le système catalytique de polymérisation par métathèse d'oléfine dans un moule ;
b) le fait de soumettre la composition à des conditions propres à favoriser une réaction de métathèse d'oléfine de l'oléfine cyclique dans le moule fermé ; et
c) le fait de sortir la composition durcie du moule afin d'obtenir l'article moulé, de préférence, dans lequel l'article moulé après l'étape c) a une température de transition vitreuse T_{g} égale ou supérieure à la température du moule, plus préférablement dans lequel le procédé comprend en outre l'étape consistant à éliminer des parties de bavure et dans lequel l'article moulé après l'étape c) a une température de transition vitreuse T_{g} égale ou supérieure à la température de moule.

14. Procédé selon la revendication 13, comprenant l'étape consistant à injecter la composition dans le moule fermé.

15. Article moulé pouvant être obtenu par le procédé selon la revendication 13 ou 14, dans lequel l'article moulé a facultativement une plus petite épaisseur, et la plus petite épaisseur facultative ou une épaisseur moyenne de l'article moulé en dehors des éventuelles parties de bavure est comprise entre 0,2 et 4 mm, plus préférablement entre 0,2 et 0,5 mm.
